# EUROPEAN PATENT SPECIFICATION

(11) **EP 3 863 183 B1**
(45) Date of publication and mention of the grant of the patent: **02.08.2023**
(21) Application number: 20858955.6
(22) Date of filing: 19.08.2020
(51) Int. Cl.: H04B 1/713, H04W 72/56, H04W 16/14

(54) **FREQUENCY-HOPPING FREQUENCY POINT SHARING METHOD, RECOVERY METHOD, CONTROLLER, BASE STATION SYSTEM AND COMPUTER READABLE STORAGE MEDIUM**
VERFAHREN ZUR GEMEINSAMEN NUTZUNG VON FREQUENZSPRUNGPUNKTEN, RÜCKGEWINNUNGSVERFAHREN, STEUERGERÄT, BASISSTATIONSSYSTEM UND COMPUTERLESBARES SPEICHERMEDIUM
PROCÉDÉ DE PARTAGE DE POINT DE FRÉQUENCE DE SAUT DE FRÉQUENCES, PROCÉDÉ DE RÉCUPÉRATION, DISPOSITIF DE COMMANDE, SYSTÈME DE STATION DE BASE ET SUPPORT DE STOCKAGE LISIBLE PAR ORDINATEUR

(30) Priority: 26.08.2019 CN 201910792417
(43) Date of publication of application: 11.08.2021
(73) Proprietor: ZTE Corporation, Shenzhen, Guangdong 518057 (CN)
(72) Inventor: YANG, Yiqin, Shenzhen, Guangdong 518057 (CN); ZHAO, Fengli, Shenzhen, Guangdong 518057 (CN); LI, Fuyan, Shenzhen, Guangdong 518057 (CN)
(74) Representative: Betten & Resch
(86) International application number: PCT/CN2020/109991
(87) International publication number: WO 2021/036880

(56) References cited:
- WO-A1-2010/091713
- CN-A- 101 662 790
- CN-A- 102 547 721
- CN-A- 102 612 041
- CN-A- 103 096 324
- CN-A- 108 271 163
- CN-A- 108 271 163
- US-A1- 2018 302 118

## Description

### TECHNICAL FIELD

Embodiments of the present application relate to, but not limited to, the technical field of communication, and more particularly, to a method for sharing frequency-hopping frequency points, a method for recovering frequency-hopping frequency points, a controller, a base station system and a computer-readable storage medium.

### BACKGROUND

Spectrum resources are key resources of the Global System for Mobile Communication (GSM) network and Long Term Evolution (LTE) network. To reduce interference, the GSM network and the LTE network generally use their own special spectrum resources. However, with the increase of terminal users of the LTE, there is an urgent need to expand the bandwidth of the LTE. The system capacity and performance can be effectively improved by improving the utilization of spectrum resources.

Some frequency points in the GSM network are configured within the carrier transmission bandwidth of the LTE network and overlapped with the spectrum resource blocks in the LTE network. However, according to the actual use need, the system permits use of only one format in a certain region. Using the tidal effect of telephone traffic, the LTE network and the GSM network can share, but not use simultaneously, the overlapped frequency bands, so that the utilization of spectrum resources can be improved.

WO2010091713A1 relates to the field of radio resource allocation between fourth-generation Evolved Universal Terrestrial Radio Access Networks (E-UTRANs) and second-generation radio access networks according to the GSM/EDGE standard (herein also referred to as GERANs). More particularly, the invention proposes a method and mechanism which allows GERAN and LTE radio resource management to share the same spectrum allocation in both co-channels and adjacent channels. CN108271163A relates to a method and device for sharing spectrum resources. The method comprises the steps of judging whether there is a high-load cell with the spectrum utilization ratio being greater than a preset spectrum utilization ratio or not in a coverage range of a predetermined base station of a GSM network, wherein the predetermined base station is a base station in a region in which spectrum sharing is determined to be performed; under the condition that there is a high-load cell, determining a sharing region according to an interference neighbor cell of the high-load cell; and distributing unused predetermined frequency bands of the GSM network to an LTE network in the sharing region to use according to utilization conditions of frequency points of the GSM network in the sharing region. CN101662790A relates to a method of carrier frequency fault automatic processing and failure recovery aiming to avoiding the problem that when adopting the base band hopping frequency mode, the conversation performance is affected by carrier frequency fault. The method comprises the following steps: a base station reports the status messages of one or more carrier frequencies which have fault in the base band hopping frequency group to a base station controller; the base station controller shifts the one or more carrier frequencies out of the base band hopping frequency group; when the one or more carrier frequencies recover normal function, the base station controller shifts the one or more carrier frequencies in the base band hopping frequency group.

The frequency hopping technology can provide improved anti-interference and anti-fading performances of the GSM network, greatly improved call quality, enhanced networking capability of tight multiplexing and increased system capacity, so it is widely used in the GSM network. However, the existing spectrum sharing technology cannot support the frequency hopping function well. When a frequency hopping carrier uses a frequency point belonging to the shared spectrum, due to the complexity of the frequency hopping system, these frequency-hopping frequency points cannot be shared to the LTE and can only be occupied by the GSM. As a result, the number of frequency points that can be shared is greatly decreased, leading to significantly reduced utilization of spectrum resources.

### SUMMARY

The following is an overview of the subjects detailed here. This summary is not intended to limit the protection scope of the claims.

In accordance with an aspect of the present application, a method for sharing frequency-hopping frequency points, a method for recovering frequency-hopping frequency points, a controller, a base station system and a computer-readable storage medium are provided.

In accordance with another aspect of the present application, a method for sharing frequency-hopping frequency points is provided, which includes: ranking shared frequency points in a frequency hopping system from a lowest priority to a highest priority according to a smallest distance to a largest distance to a center frequency point in an LTE network; allocating the shared frequency points to carrier frequencies in the frequency hopping system; and in response to detecting that there are idle carrier frequencies in the frequency hopping system, and the frequency points having a priority lower than that of the shared frequency points in the idle carrier frequencies having been shared, sharing the shared frequency points in the idle carrier frequencies for use by the LTE network; sharing the shared frequency points in the idle carrier frequencies for use by the LTE network comprises: modifying a frequency hopping attribute of the carrier frequencies in the frequency hopping system, and releasing the shared frequency points in the currently idle carrier frequencies to the LTE network for use; characterized in that, modifying a frequency hopping attribute of the carrier frequencies in the frequency hopping system comprises: cyclically executing the following process until an exit condition is satisfied, wherein the exit condition is p>7; setting an initial value of p as 0, the cyclically executed process comprising: blocking a time slot p of non-idle carrier frequencies; transferring or releasing services on the time slot p of the non-idle carrier frequencies; setting the frequency hopping attribute of the time slot p of the currently idle carrier frequencies as no frequency hopping; setting the frequency hopping attribute of the time slot p of the non-idle carrier frequencies as using frequency-hopping frequency points other than the shared frequency points to be released by the currently idle carrier frequencies to realize frequency hopping; de-blocking the time slot p of the non-idle carrier frequencies; and setting p=p+1.

In accordance with another aspect of the present application, a method for recovering frequency-hopping frequency points is provided, which includes: in response to a frequency hopping system sharing shared frequency points to an LTE network by the sharing method, according to a condition of service occupation, recovering the shared frequency points and adding the recovered shared frequency points into the frequency hopping system again; wherein recovering the shared frequency points and adding the recovered shared frequency points into the frequency hopping system again comprises: informing the LTE network of the shared frequency points to be recovered; and re-allocating the recovered shared frequency points to carrier frequencies in the frequency hopping system for use; characterized in that, re-allocating the recovered shared frequency points to carrier frequencies in the frequency hopping system for use comprises: modifying the frequency hopping attribute of the carrier frequencies in the frequency hopping system, comprising: cyclically executing the following process until an exit condition is satisfied, where the exit condition is p>7; setting an initial value of p as 0, and the cyclically executed process comprising: blocking the time slot p of each carrier frequency; transferring or releasing services on the time slot p of each carrier frequency; adding the recovered shared frequency points to the time slot p of each carrier frequency in the frequency hopping system; de-blocking the time slot p of each carrier frequency; and setting p=p+1.

In accordance with another aspect of the present application, a controller is provided, which includes: a memory, a processor, and computer programs that are stored on the memory and runnable on the processor, the computer programs, when executed by the processor, cause the processor to execute: the method for sharing frequency-hopping frequency points; or the method for recovering frequency-hopping frequency points.

In accordance with another aspect of the present application, a computer-readable storage medium storing computer-executable instructions is provided, the computer-executable instructions are configured to: execute the method for sharing frequency-hopping frequency points; or execute the method for recovering frequency-hopping frequency points.

Other features and advantages of the present application will be described in the following description, and partly become apparent from the description, or understood by implementing the present application. The purpose and other advantages of the application can be realized and obtained through the structures pointed out in the description, claims and drawings.

### BRIEF DESCRIPTION OF DRAWINGS

The accompanying drawings are provided for further understanding of the technical schemes of the present application and constitute a part of this specification. The accompanying drawings are used for explaining the technical schemes of the present application together with the embodiments of the present application, rather than limiting the technical schemes of the present application.
Fig. 1 is a diagram of a typical configuration scenario of spectrum resource sharing between a GSM network and an LTE network;
Fig. 2 is a flowchart of a sharing method for frequency-hopping frequency points according to an embodiment of the present application;
Fig. 3 is a flowchart of a method for recovering frequency-hopping frequency points according to another embodiment of the present application;
Fig. 4 is a schematic view of a frequency hopping system according to an embodiment of the present application;
Fig. 5 is a flowchart of a mode of not modifying the frequency hopping system in the sharing method according to an embodiment of the present application;
Fig. 6 is a flowchart of a mode of modifying the frequency hopping system in the sharing method according to another embodiment of the present application;
Fig. 7 is a flowchart of modifying the frequency hopping attribute of carrier frequencies in the sharing method according to an embodiment of the present application;
Fig. 8 is a flowchart of modifying the frequency hopping attribute of carrier frequencies in the sharing method according to another embodiment of the present application;
Fig. 9 is a flowchart of transferring or releasing services on the time slot p of non-idle carrier frequencies in the sharing method according to another embodiment of the present invention;
Fig. 10 is a flowchart of a method for recovering frequency-hopping frequency points according to an embodiment of the present application;
Fig. 11 is a flowchart of a method for recovering frequency-hopping frequency points according to another embodiment of the present application;
Fig. 12 is a flowchart of modifying the frequency hopping attribute of carrier frequencies in the recovery method according to an embodiment of the present application;
Fig. 13 is a flowchart of modifying the frequency hopping attribute of carrier frequencies in the recovery method according to another embodiment of the present application;
Fig. 14 is a flowchart of transferring or releasing services on the time slot p of each carrier frequency in the recovery method according to an embodiment of the present invention;
Fig. 15 is a schematic view of a controller according to an embodiment of the present application; and
Fig. 16 is a connection diagram of a base station system and a controller according to an embodiment of the present application.

### DETAILED DESCRIPTION

In order to make the objectives, technical schemes, and advantages of the present application clearer, the following further describes the present application in detail with reference to the accompanying drawings and embodiments. It should be understood that the embodiments described here are only used to explain the present application, and are not used to limit the present application.

It should be noted that although functional modules are divided in the schematic diagram of the device, the logical sequence is shown in the flowchart, however, in some cases, the steps shown or described may be executed in a different order from the module division in the device or in a different order from that in the flowchart. The terms "first", "second", etc. in the specification and claims and the above-mentioned drawings are used to distinguish similar objects, and not necessarily used to describe a specific sequence or precedence.

Some frequency points in the GSM network are configured within the carrier transmission bandwidth of the LTE network and overlapped with the spectrum resource blocks in the LTE network. However, according to the actual use need, the system permits use of only one format in a certain region. Using the tidal effect of telephone traffic, the LTE network and the GSM network can share, but not use simultaneously, the overlapped frequency bands, so that the utilization of spectrum resources can be improved.

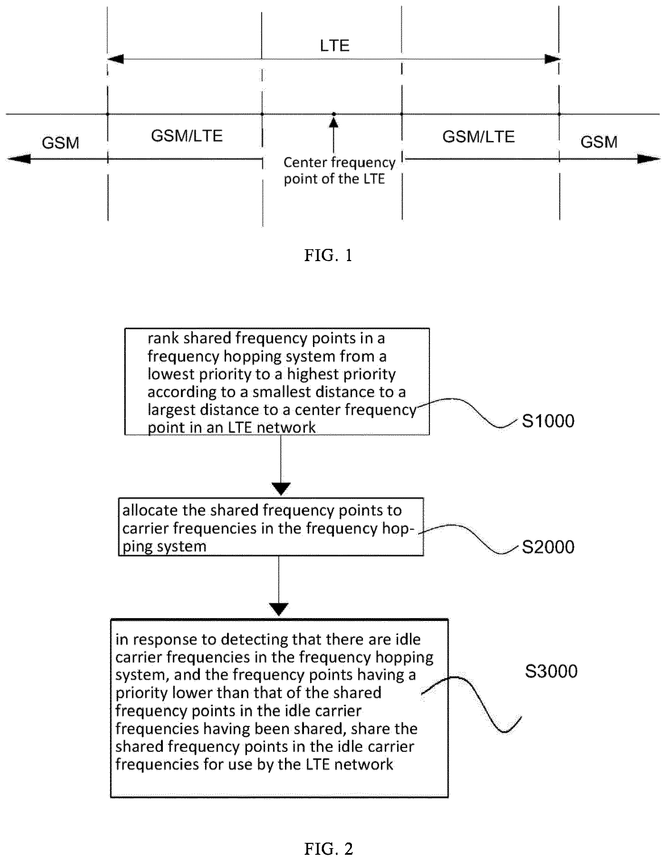

Referring to Fig. 1, Fig. 1 is a diagram of a typical configuration scenario of spectrum resource sharing between a GSM network and an LTE network. The special spectrum of the LTE network is located in the middle, and the special spectrum of the GSM network is located on two sides, with an overlap being a shared spectrum which can be scheduled by the GSM and LTE networks but is used by the GSM network. Meanwhile, it is stipulated that the frequency points can be used by the LTE network only when the GSM network does not continuously use the frequency points in the overlap from near a center frequency point of the LTE network. The existing spectrum sharing technology is to modify the wireless resource allocation mode of the GSM network, where the special spectrum of the GSM network is allocated, followed by the shared spectrum in which frequency points are selected according to the largest to smallest distance to the center frequency point of the LTE network for resource allocation, so that as many sharing frequency points as possible are vacated for use by the LTE network, and the utilization of spectrum resources is thus improved.

The frequency hopping technology can improve the anti-interference and anti-fading performances of the GSM network, greatly improve the call quality, enhance the networking capability of tight multiplexing and increase the system capacity, so it is widely used in the GSM network. However, the existing spectrum sharing technology cannot support the frequency hopping function well. When a frequency hopping carrier uses a frequency point belonging to the shared spectrum, due to the complexity of the frequency hopping system, these frequency-hopping frequency points cannot be shared to the LTE and can only be occupied by the GSM. As a result, the number of frequency points that can be shared is greatly decreased, leading to significantly reduced utilization of spectrum resources.

On this basis, embodiments of the present application provide a sharing method for frequency-hopping frequency points, a method for recovering frequency-hopping frequency points, a controller, a base station system and a storage medium. The sharing method includes steps of ranking shared frequency points in a frequency hopping system from a lowest priority to a highest priority according to a smallest distance to a largest distance to a center frequency point in an LTE network; allocating the shared frequency points to carrier frequencies in the frequency hopping system; when there are idle carrier frequencies satisfying a sharing condition, sharing the shared frequency points in the idle carrier frequencies to the LTE network for use in a case where the frequency points having a priority less than that of the shared frequency points in the idle carrier frequencies have been shared; and recovering, to the frequency hopping system, the shared frequency points that are shared to the LTE network according to a condition of service occupation. In accordance with the solutions provided in the embodiments of the present application, the shared frequency points in the frequency hopping system can be shared to the LTE network for use, and the shared frequency points can be recovered when the GSM network is busy, so that the function of the frequency hopping system is ensured and the utilization of spectrum resources is improved.

The embodiments of the present application will be further described below with reference to the accompanying drawings.

In a first aspect, referring to Fig. 2, an embodiment of the present application provides a sharing method for frequency-hopping frequency points. In an embodiment, the sharing method includes, but not limited to, the following steps of S 1000, S2000 and S3000.

At S1000, shared frequency points in a frequency hopping system are ranked from a lowest priority to a highest priority according to a smallest distance to a largest distance to a center frequency point in an LTE network.

In the spectrum resource sharing scheme based on the GSM network and the LTE network, the special spectrum of the LTE network is located in the middle, and the special spectrum of the GSM network is located on two sides with an overlap being a shared spectrum. In the step S1000, a frequency point having a larger distance to the center frequency point of the LTE network is set to have a higher priority, so that shared frequency points having a higher priority is used by the frequency hopping system of the GSM network. Thus, the shared frequency points close to the special spectrum of the LTE network are released as far as possible for use by the LTE network, and the utilization of spectrum resources is improved.

At S2000, the shared frequency points are allocated to carrier frequencies in the frequency hopping system.

In an embodiment of the step S2000, the sharing the shared frequency points to carrier frequencies in the frequency hopping system includes: correspondingly allocating, in an order from a lowest priority to a highest priority, the shared frequency points to carrier frequencies having a largest Mobile Allocation Indication Offset to a smallest Mobile Allocation Indication Offset (MAIO). The MAIO is used to determine a frequency hopping starting point. The MAIO is used to prevent multiple channels from competing for the same frequency point at the same moment. For this purpose, in a same frequency hopping system, each carrier frequency use a different MAIO. In this embodiment, since the shared frequency points are shared in an order from the smallest to largest distance to the center frequency point of the LTE network, after the frequency points are allocated according to the above rule, the carrier frequencies in the frequency hopping system are vacated in an order from the largest MAIO to the smallest MAIO, so that the stable operation of the frequency hopping system after modification in the subsequent steps can be ensured.

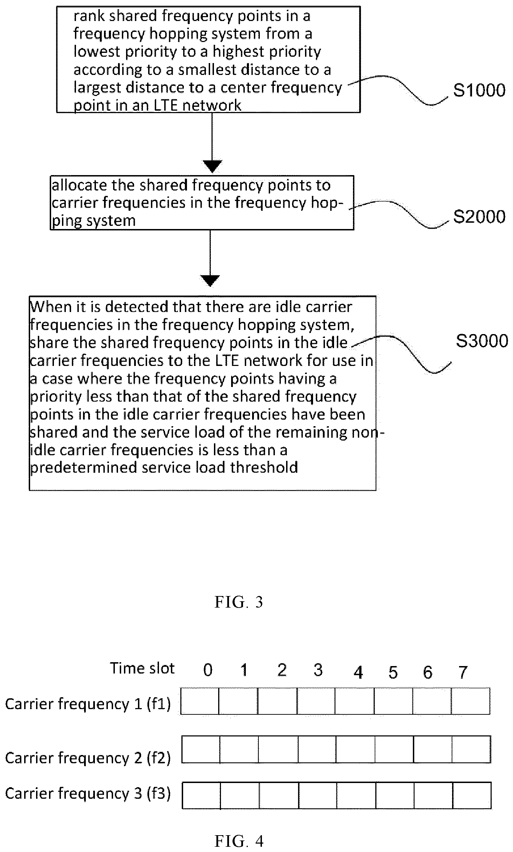

For example, referring to Fig. 4, Fig. 4 shows that a frequency hopping system with three carrier frequencies is allocated with three shared frequency points f1, f2 and f3. The MAIOs correspondingly used by the three carrier frequencies (i.e., carrier frequency 1, carrier frequency 2 and carrier frequency 3) in the frequency hopping system is 0, 1 and 2. The priorities of the three shared frequency points are successively f3, f2 and f1 from low to high. The shared frequency point f1 is allocated to the carrier frequency 1, the shared frequency point f2 is allocated to the carrier frequency 2, and the shared frequency point f3 is allocated to the carrier frequency 3.

At S3000, when it is detected that there are idle carrier frequencies in the frequency hopping system, the shared frequency points in the idle carrier frequencies are shared to the LTE network for use in a case where the frequency points having a priority less than that of the shared frequency points in the idle carrier frequencies have been shared.

In some embodiments of the S3000, when it is detected that there are idle carrier frequencies in the frequency hopping system, and when the shared frequency points having a priority less than that of the shared frequency points in the idle carrier frequencies have been shared, the shared frequency points in the idle carrier frequencies are shared to the LTE network for use. With such setting, the LTE network can use continuous frequency bands.

As shown in Fig. 3, in other embodiments of the step 3000, when it is detected that there are idle carrier frequencies in the frequency hopping system, in a case where the frequency points having a priority less than that of the shared frequency points in the idle carrier frequencies have been shared and the service load of the remaining non-idle carrier frequencies is less than a predetermined service load threshold, the shared frequency points in the idle carrier frequencies are shared to the LTE network for use. With such setting, it is ensured that the LTE can use continuous frequency bands; on the other hand, the frequency points can be shared only under the sharing condition that the frequency hopping system is sufficient to deal with the current traffic, thereby ensuring the service performance of the GSM network.

During the practical application of the step S3000, a mode of not modifying the frequency hopping system or a mode of modifying the frequency hopping system can be selected according to the actual application scenario, so that the shared frequency points in the idle carrier frequencies are shared to the LTE network for use.

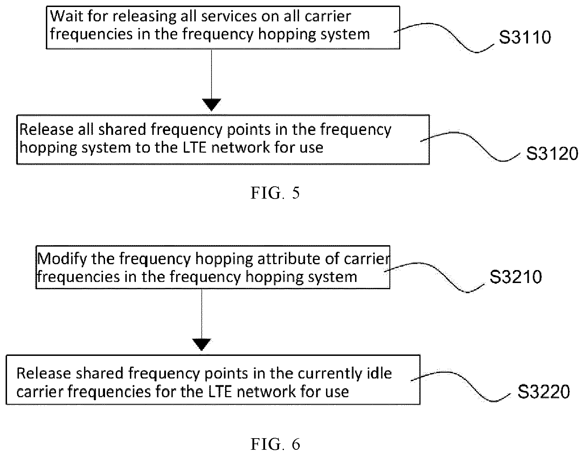

As shown in Fig. 5, the implementation of not modifying the frequency hopping system can be carried out by the following steps of S3110 and S3120.

At S3110, release of services on all carrier frequencies in the frequency hopping system is waited for.

At S3120, all the shared frequency points in the frequency popping system are released to the LTE network for use.

This mode is easy to implement, the frequency-hopping frequency points can be shared, and there is little change to the existing system. However, the sharing speed is low, and the sharing gain of the frequency hopping spectrum is low.

As shown in Fig. 6, the implementation of modifying the frequency hopping system according to the claimed invention is carried out by the following steps.

At S3210, a frequency hopping attribute of the carrier frequencies in the frequency hopping system is modified.

At S3220, the shared frequency points in the currently idle carrier frequencies are released to the LTE network for use.

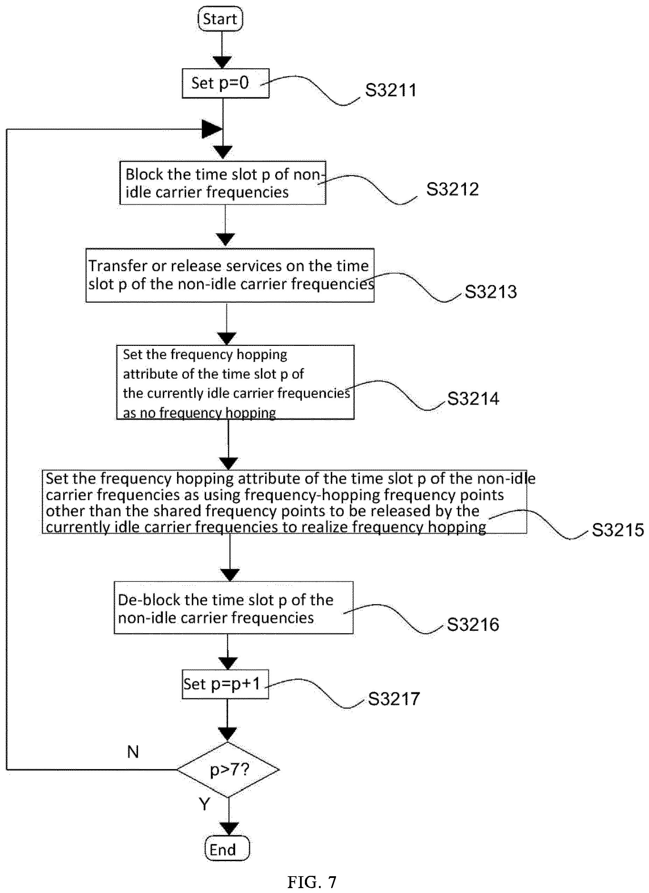

As shown in Fig. 7, according to the claimed invention, the step S3210 includes the following sub-steps of S3211, S3212, S3213, S3214, S3215, S3216 and S3217.

At S3211, an initial value of p is set as 0.

The following steps are cyclically executed until an exit condition p>7 is satisfied.

At S3212, the time slot p of the non-idle carrier frequencies is blocked.

At S3213, the services on the time slot p of the non-idle carrier frequencies are transferred or released.

At S3214, the frequency hopping attribute of the time slot p of the currently idle carrier frequencies is set as no frequency hopping.

At S3215, the frequency hopping attribute of the time slot p of the non-idle carrier frequencies is used as using frequency-hopping frequency points other than the shared frequency points to be released by the currently idle carrier frequencies to realize frequency hopping.

At S3216, the time slot p of the non-idle carrier frequencies is de-blocked.

At S3217, it is set that p=p+1.

By taking the frequency hopping system shown in Fig. 4 as an example, when it is detected that the carrier frequency 3 is idle currently and satisfies the sharing condition (that is, the frequency points having a priority less than that of the frequency point f3 have been shared), and the frequency hopping system supports modification, the frequency hopping attribute of carrier frequencies in the frequency hopping system can be modified by the following steps: the time slot 0 of the non-idle carrier frequencies 1 and 2 is blocked, and service data is stopped being transmitted to the time slot 0 of the carrier frequencies 1 and 2; services on the time slot 0 of the non-idle carrier frequencies are transferred or released; the time slot 0 of the carrier frequency 3 is set to be not hopped; the time slot 0 of the carrier frequencies 1 and 2 are set to use frequency-hopping frequency points other than the shared frequency points f3 to be released by the carrier frequency 3, i.e., using the frequency points f1 and f2; and, the time slot 0 of the carrier frequencies 1 and 2 is de-blocked, so that the time slot 0 of the carrier frequencies 1 and 2 is re-activated. Thus, the frequency hopping attribute of the time slot 0 of the carrier frequencies 1, 2 and 3 in the frequency hopping system is modified, and the frequency hopping attribute of the time slots 1 to 7 in the carrier frequencies 1, 2 and 3 are successively modified by the above steps.

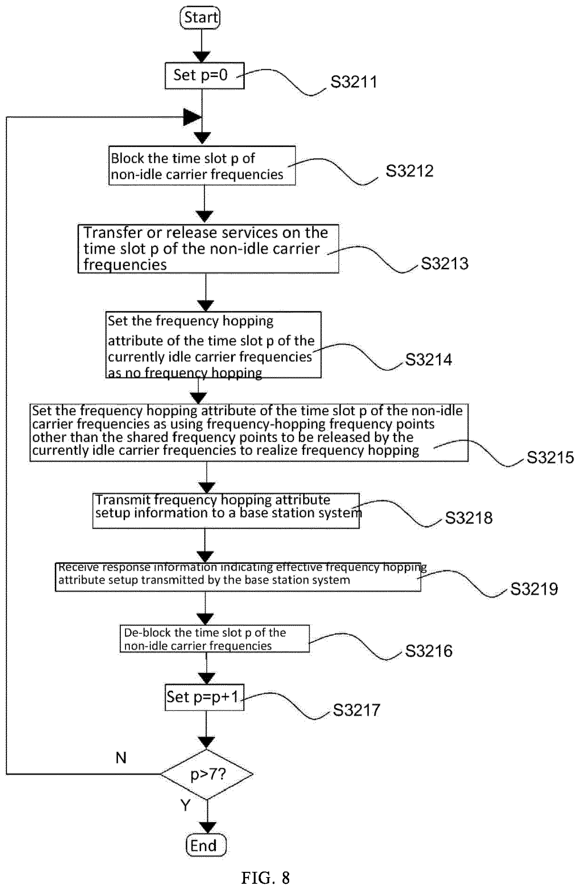

As shown in Fig. 8, in some embodiments, the step S3210 further includes the following steps of S3218 and S3219.

At S3218, frequency hopping attribute setup information is transmitted to a base station system.

At S3219, response information indicating effective frequency hopping setup transmitted by the base station system is received.

During each cycle, after the frequency hopping attribute of the corresponding time slot p of each carrier frequency in the frequency hopping system is modified, a base station controller initiates data synchronization to the base station system, and continuously transmits multiple pieces of frequency hopping attribute setup information to the base station system; upon receiving the frequency hopping attribute setup information transmitted by the base station controller, the base station system sets a new frequency hopping attribute for the time slot of corresponding carrier frequencies in the base station controller, and returns response information indicating effective frequency hopping attribute setup to the base station controller; and, the base station controller receives the response information indicating effective frequency hopping attribute transmitted by the base station system, and de-blocks the time slot p of non-idle carrier frequencies.

In other embodiments, it is also possible that the base station initiates data synchronization to the base station system after the frequency hopping attributes of all time slots of all carrier frequencies in the frequency hopping system are modified, and the base system sets new frequency hopping attributes for all time slots of all carrier frequencies in the base station controller and returns response information indicating effective frequency hopping attribute setup to the base station controller. The base station controller receives the response information indicating effective frequency hopping attribute setup transmitted by the base station system, and de-blocks the time slot of each non-idle carrier frequency.

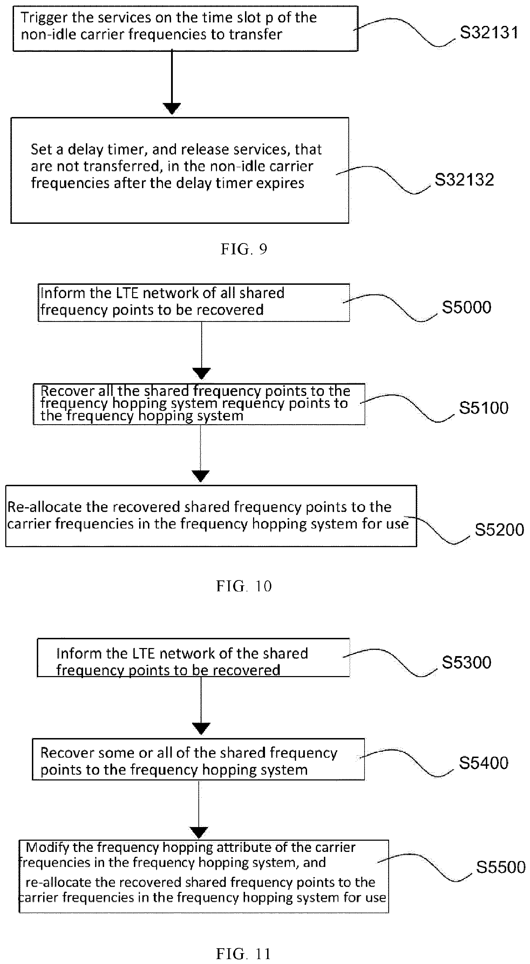

Referring to Fig. 9, in an embodiment of the step S3212, the transferring or releasing services on the time slot p of non-idle carrier frequencies includes the following steps of S32131 and S32132.

At S32131, the services on the time slot p of the non-idle carrier frequencies are triggered to transfer.

At S32132, a delay timer is set, and the services, that are not transferred, in the non-idle carrier frequencies are released after the delay timer expires.

In this embodiment, the time required to transfer services on the time slot p of the non-idle carrier frequencies is defined by the delay timer. When there are still services not transferred after the delay timer expires, the services are released forcibly to ensure the smooth implementation of frequency hopping sharing.

In some embodiments, when there is an abnormality or a configuration change related to the frequency hopping attribute and sharing during the modification process, the modification process is terminated, and the frequency hopping attribute of the frequency hopping system before modification is recovered, so that the normal service function of the frequency hopping system is ensured.

In some embodiments, after the modification process is terminated and the attribute of the frequency hopping system before modification is recovered, the method further includes: marking the shared frequency points to be released in the currently idle carrier frequencies as being occupied by a GSM network, and waiting for subsequent re-sharing.

In some embodiments, when there are a large number of service accesses in the process of modifying the frequency hopping attribute of carrier frequencies in the frequency hopping system, the modification process is terminated, so that the normal service function of the frequency hopping system is ensured.

In a second aspect, an embodiment of the present application provides a method for recovering frequency-hopping frequency points, including steps of: in a case where a frequency hopping system already shares shared frequency points to an LTE network by the sharing method described above, according to a condition of service occupation, recovering the shared frequency points and adding the recovered shared frequency points into the frequency hopping system again.

Referring to Fig. 10, in an embodiment, in a case of not modifying the frequency hopping system, the shared frequency points that are shared to the LTE network are recovered to the frequency hopping system by the following steps of S5000, S5100 and S5200.

At S5000, the LTE network is informed of the shared frequency points to be recovered.

At S5100, all the shared frequency points are recovered to the frequency hopping system.

At S5200, the recovered shared frequency points are re-allocated to carrier frequencies in the frequency hopping system for use.

After all shared frequency points belonging to a certain frequency hopping system have been shared, and if channels are occupied by services on the GSM side, it is determined that the load increases. When it is required to occupy a carrier frequency in the frequency hopping system, and if the modification to the frequency hopping system is not supported, all shared frequency points in the frequency hopping system will be recovered. A message is transmitted to the LTE, and all shared frequency points in the frequency hopping system are recovered.

Referring to Fig. 11, in another embodiment, in a case of modifying the frequency hopping system, the shared frequency points that are shared to the LTE network are recovered to the frequency hopping system by the following steps of S5300, S5400 and S5500.

At S5300, the LTE network is informed of the shared frequency points to be recovered.

At S5400, some or all of the shared frequency points are recovered to the frequency hopping system.

At S5500, the frequency hopping attribute of carrier frequencies in the frequency hopping system is modified, and the recovered shared frequency points are re-allocated to the carrier frequencies in the frequency hopping system for use.

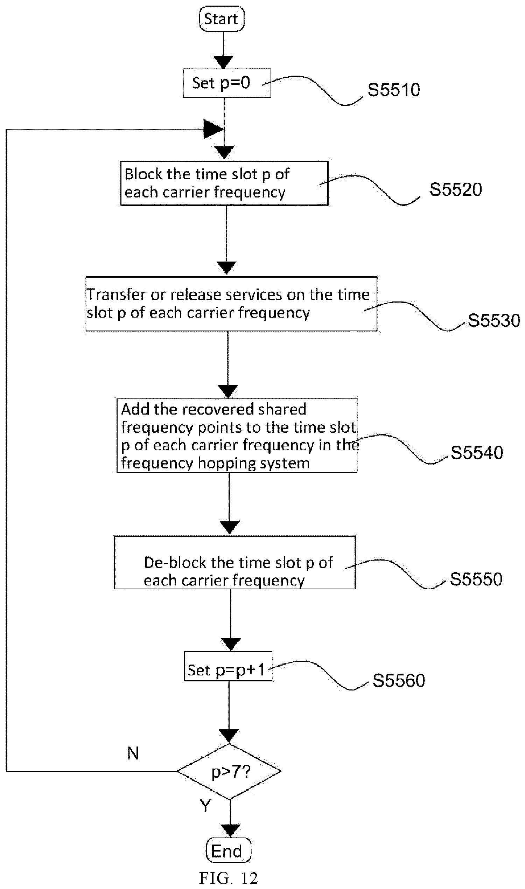

Referring to Fig. 12, the step S5500 may include the following steps of S5510, S5520, S5530, S5540, S5550 and S5560.

At S5510, the initial value of p is set as 0.

The following steps are cyclically executed until an exit condition p>7 is satisfied.

At S5520, the time slot p of each carrier frequency is blocked.

At S5530, services on the time slot p of each carrier frequency are transferred or released.

At S5540, the recovered shared frequency points are added to the time slot p of each carrier frequency in the frequency hopping system.

At S5550, the time slot p of each carrier frequency is de-blocked.

At S5560, it is set that p=p+1.

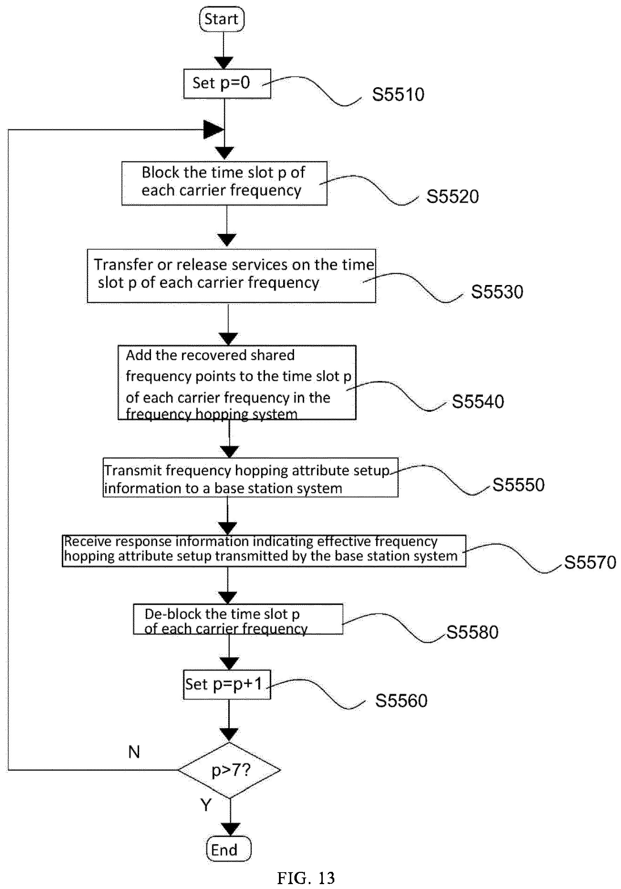

Referring to Fig. 13, in an embodiment, before the time slot p of each carrier frequency is de-blocked, the method further includes the following steps of S5570 and S5580.

At S5570, frequency hopping attribute setup information is transmitted to a base station system.

At S5580, response information indicating effective frequency hopping setup transmitted by the base station system is received.

In this embodiment, during each cycle, after the frequency hopping attribute of the corresponding time slot p of each carrier frequency in the frequency hopping system is modified, a base station controller initiates data synchronization to the base station system, and continuously transmits multiple pieces of frequency hopping attribute setup information to the base station system; upon receiving the frequency hopping attribute setup information transmitted by the base station controller, the base station system sets a new frequency hopping attribute for the time slot of corresponding carrier frequencies, and returns response information indicating effective frequency hopping attribute setup to the base station controller; and, the base station controller receives the response information indicating effective frequency hopping attribute transmitted by the base station system, and de-blocks the time slot p of non-idle carrier frequencies.

In other embodiments, it is also possible that the base station initiates data synchronization to the base station system after the frequency hopping attributes of all time slots of all carrier frequencies in the frequency hopping system are modified, and the base system sets new frequency hopping attributes for all time slots of all carrier frequencies in the base station controller and returns response information indicating effective frequency hopping attribute setup to the base station controller. The base station controller receives the response information indicating effective frequency hopping attribute setup transmitted by the base station system, and de-blocks the time slot of each non-idle carrier frequency.

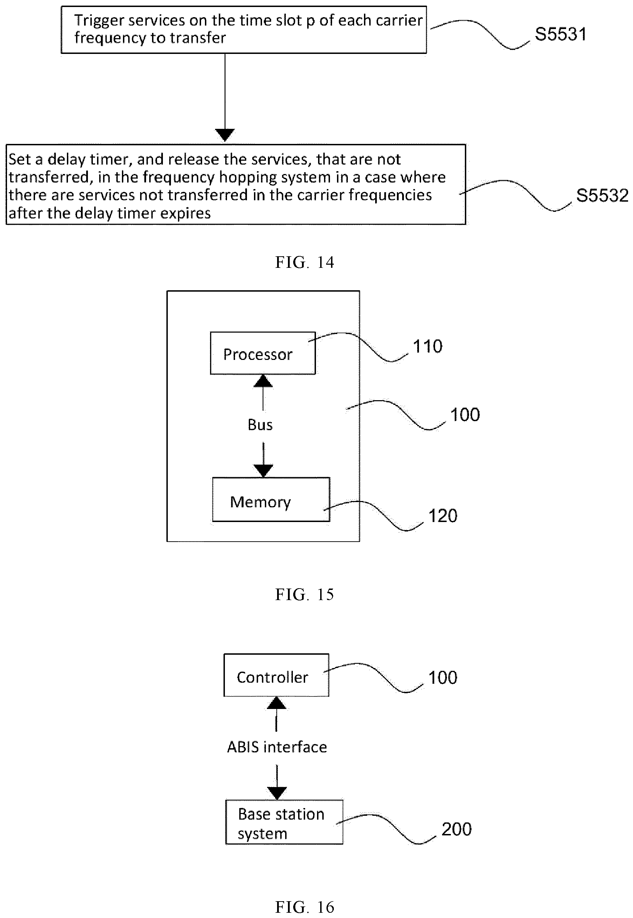

Referring to Fig. 14, the S5530 may be performed by the following steps of S5531 and S5532.

At S5531, the services on the time slot p of each carrier frequency are triggered to transfer.

At S5532, a delay timer is set; and when there are services not transferred in the carrier frequency after the delay timer expires, services that are not transferred in the hopping systems are released.

In some embodiments, the services on the time slot p of each carrier frequency are transferred or released. Before the services have been released before the delay timer expires, the modification to the frequency hopping attribute of the time slot p of each carrier frequency in the frequency hopping system is terminated, and the shared frequency points are re-shared to the LTE for use.

In a third aspect, referring to Fig. 15, an embodiment of the present application provides a controller 100. The controller 100 may be a base station controller or a server.

The controller 100 includes: a memory 120, a processor 110, and computer programs that are stored on the memory 120 and runnable on the processor 110, where the computer programs, when executed by the processor 110, cause the processor 110 to execute: the method for sharing frequency-hopping frequency points described above; or the method for recovering frequency-hopping frequency points described above.

The processor 110 and the memory 120 may be connected via bus or in other ways.

As a non-transient computer-readable storage medium, the memory 120 may be used to store non-transient software programs and non-transient computer-executable programs, such as the sharing method for frequency-hopping frequency points provided in the embodiments of the first aspect of the present application or the method for recovering frequency-hopping frequency points provided in the embodiments of the second aspect of the present application. The processor 110 executes the method for sharing frequency-hopping frequency points provided in the embodiments of the first aspect or the method for recovering frequency-hopping frequency points provided in the embodiments of the second aspect by running the non-transient software programs and instructions stored on the memory 120.

The memory 120 may include a program storage region and a data storage region, where the program storage region may store the operating system and the applications required by at least one function, and the data storage region may store and execute the sharing method for frequency-hopping frequency points provided in the embodiments of the first aspect or the method for recovering frequency-hopping frequency points provided in the embodiments of the second aspect. In addition, the memory 120 may include high-speed random access memories, or may include non-transient memories, such as at least one disk memory device, flash memory devices or other non-transient solid-state memory devices. In some implementations, the memory 120 may include memories remotely arrange with respect to the processor 110. These remote memories may be connected to this terminal via a network. Examples of the network include, but not limited to, the Internet, Intranet, local area networks, mobile communication networks and combinations thereof.

The non-transient software programs and instructions required for implementing the sharing method for frequency-hopping frequency points provided in the embodiments of the first aspect or the method for recovering frequency-hopping frequency points provided in the embodiments of the second aspect are stored in the memory 120. The non-transient software programs and instructions, when executed by one or more processors 110, cause the one or more processors 110 to execute the sharing method for frequency-hopping frequency points provided in the embodiments of the first aspect or the method for recovering frequency-hopping frequency points provided in the embodiments of the second aspect, for example, to execute the steps S1000 to S3000 in the method in Fig. 2, the steps S1000 to S3000 in the method in Fig. 3, the steps S3110 to S3120 in the method in Fig. 5, the steps S3210 to S3220 in the method in Fig. 6, the steps S3211 to S3217 in the method in Fig. 7, the steps S3211 to S3219 in the method in Fig. 8, the steps S32131 to S32132 in the method in Fig. 9, the steps S5000 to S5200 in the method in Fig.10, the steps S5300 to S5500 in the method in Fig. 11, the steps S5510 to S5560 in the method in Fig. 12, the steps S5510 to S5580 in the method in Fig. 13, or the steps S5531 to S5532 in the method in Fig. 14.

In a fourth aspect, referring to Fig. 16, an embodiment of the present application provides a base station system 200. The base station system 200 can perform information interaction with the controller 100 provided in the embodiments of the third aspect, including: receiving frequency hopping attribute setup information transmitted by the controller 100; setting a new frequency hopping attribute for carrier frequencies in the base station system 200 according to the frequency hopping setup information transmitted by the controller 100; and transmitting, to the controller 100, response information indicating effective frequency hopping setup.

In an embodiment, the base station system 200 is connected to the controller 100 via an ABIS interface to realize information interaction. For example, the base station controller 100 transmits several pieces of frequency hopping attribute setup information to the base station system 200 via the ABIS interface. The base station system 200 sets frequency hopping attributes for the corresponding carrier frequencies and time slots according to the received frequency hopping attribute setup information, and transmits, to the base station controller 100, response information indicating effective frequency hopping setup at the end of setting to indicate that the modification of carrier frequencies is completed.

In a fifth aspect, an embodiment of the present application provides a computer-readable medium storing computer-executable instructions, where the computer-executable instructions are configured to: execute the method for sharing frequency-hopping frequency points described above; or execute the method for recovering frequency-hopping frequency points described above.

In an embodiment, the computer-readable storage medium stores computer-executable instructions which are executed by one or more control processors 110. For example, the computer-executable instructions are executed by one processor 110 in the controller 100 provided in the embodiments of the third aspect, so that the one or more processors 110 are allowed to execute the sharing method for frequency-hopping frequency points provided in the embodiments of the first aspect or the method for recovering frequency-hopping frequency points provided in the embodiments of the second aspect, for example, executing the steps S1000 to S3000 in the method in Fig. 2, the steps S1000 to S3000 in the method in Fig. 3, the steps S3110 to S3120 in the method in Fig. 5, the steps S3210 to S3220 in the method in Fig. 6, the steps S3211 to S3217 in the method in Fig. 7, the steps S3211 to S3219 in the method in Fig. 8, the steps S32131 to S32132 in the method in Fig. 9, the steps S5000 to S5200 in the method in Fig.10, the steps S5300 to S5500 in the method in Fig. 11, the steps S5510 to S5560 in the method in Fig. 12, the steps S5510 to S5580 in the method in Fig. 13, or the steps S5531 to S5532 in the method in Fig. 14.

The method provided in the embodiments of the present application includes steps of ranking the shared frequency points in a frequency hopping system from the lowest priority to the highest priority according to the smallest distance to the largest distance to a center frequency point of an LTE network; allocating the shared frequency points to carrier frequencies in the frequency hopping system; and, when it is detected that there are idle carrier frequencies in the frequency hopping system, under the condition that the frequency points having a priority less than that of the shared frequency points in the idle carrier frequencies have been shared, sharing the shared frequency points in the idle carrier frequencies to the LTE network for use. On the GSM side, the shared frequency points that are shared to the LTE network can be recovered to the frequency hopping system according to a condition of service occupation. In accordance with the solutions provided in the embodiments of the present application, the shared frequency points in the frequency hopping system can be shared to the LTE network for use, and the shared frequency points can be recovered when the GSM network is busy, so that the function of the frequency hopping system is ensured and the utilization of spectrum resources is improved.

The device embodiments described above are merely illustrative, and the units described as separate components may or may not be physically separated, that is, they may be located in one place, or they may be distributed on multiple network units. Some or all of the modules can be selected according to actual needs to achieve the objectives of the solutions of the embodiments.

It should be understood by those skilled in the art that functional modules or units in all or part of the steps of the method, the system and the apparatus disclosed above may be implemented as software, firmware, hardware and appropriate combinations thereof. For example, one physical component may have multiple functions, or one function or step may be executed jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a random access memory (RAM), a read-only memory (ROM), an electrically erasable programmable read-only memory (EEPROM), a flash memory or other memory technologies, a compact disc-read only memory (CD-ROM), a digital versatile disc (DVD) or other optical disc storage, a magnetic cassette, a magnetic tape, a magnetic disk storage or other magnetic storage apparatuses, or any other medium used for storing desired information and accessed by a computer. In addition, as is known to those skilled in the art, the communication medium generally includes computer-readable instructions, data structures, program modules or other data in modulated data signals such as carrier frequencies or other transmission mechanisms, and may include any information delivery medium.

The above is a detailed description of some embodiments of the application, but the application is not limited to the above embodiments.

## Claims

1. A method for sharing frequency-hopping frequency points, comprising:
ranking (S1000) shared frequency points in a frequency hopping system from a lowest priority to a highest priority according to a smallest distance to a largest distance to a center frequency point in an Long Term Evolution, LTE network;
allocating (S2000) the shared frequency points to carrier frequencies in the frequency hopping system; and
in response to detecting that there are idle carrier frequencies in the frequency hopping system, and the frequency points having a priority lower than that of the shared frequency points in the idle carrier frequencies having been shared, sharing (S3000) the shared frequency points in the idle carrier frequencies for use by the LTE network;
wherein sharing (S3000) the shared frequency points in the idle carrier frequencies for use by the LTE network comprises:
modifying (S3210) a frequency hopping attribute of the carrier frequencies in the frequency hopping system, and releasing (S3220) the shared frequency points in the currently idle carrier frequencies to the LTE network for use;
**characterized in that**,
modifying (S3210) a frequency hopping attribute of the carrier frequencies in the frequency hopping system comprises:
cyclically executing the following process until an exit condition is satisfied, wherein the exit condition is p>7;
setting (S3211) an initial value of p as 0, the cyclically executed process comprising:
blocking (S3212) a time slot p of non-idle carrier frequencies;
transferring or releasing (S3213) services on the time slot p of the non-idle carrier frequencies;
setting (S3214) the frequency hopping attribute of the time slot p of the currently idle carrier frequencies as no frequency hopping;
setting (S3215) the frequency hopping attribute of the time slot p of the non-idle carrier frequencies as using frequency-hopping frequency points other than the shared frequency points to be released by the currently idle carrier frequencies to realize frequency hopping;
de-blocking (S3216) the time slot p of the non-idle carrier frequencies; and setting (S3217) p=p+1.

2. The method of claim 1, wherein allocating (S2000) the shared frequency points to carrier frequencies in the frequency hopping system comprises:
correspondingly allocating, in an order from the lowest priority to the highest priority, the shared frequency points to carrier frequencies having a largest Mobile Allocation Indication Offset to a smallest Mobile Allocation Indication Offset, MAIO.

3. The method of claim 1, before sharing (S3000) the shared frequency points in the idle carrier frequencies for use by the LTE network, further comprising:
sharing (S3000) the shared frequency points in the idle carrier frequencies in response to service load for the remaining non-idle carrier frequencies being less than a predetermined load threshold.

4. The method of claim 1, wherein transferring or releasing (S3213) services on the time slot p of the non-idle carrier frequencies comprises:
triggering (S32131) the services on the time slot p of the non-idle carrier frequencies to transfer; and
setting (S32132) a delay timer, and releasing services, that are not transferred, in the non-idle carrier frequencies after the delay timer expires.

5. The method of claim 1, wherein modifying (S3210) a frequency hopping attribute of the carrier frequencies in the frequency hopping system further comprises:
Transmitting (S3218) frequency hopping attribute setup information to a base station system; and
receiving (S3219) response information indicating effective frequency hopping setup transmitted by the base station system.

6. The method of claim 1, wherein modifying (S3210) a frequency hopping attribute of the carrier frequencies in the frequency hopping system further comprises:
in response to occurrence of an abnormality or a configuration change related to the frequency hopping attribute and sharing during the modification process, terminating the modification process, and recovering the frequency hopping attribute of the frequency hopping system before modification.

7. A method for recovering frequency-hopping frequency points, comprising:
in response to a frequency hopping system sharing shared frequency points to an LTE network by the sharing method according to any one of claims 1 to 6,
according to a condition
of service occupation, recovering the shared frequency points and adding the recovered shared frequency points into the frequency hopping system again;
wherein recovering the shared frequency points and adding the recovered shared frequency points into the frequency hopping system again comprises:
informing (S5000) the LTE network of the shared frequency points to be recovered; and
re-allocating (S5200) the recovered shared frequency points to carrier frequencies in the frequency hopping system for use;
**characterized in that**,
re-allocating (S5200) the recovered shared frequency points to carrier frequencies in the frequency hopping system for use comprises:
modifying the frequency hopping attribute of the carrier frequencies in the frequency hopping system, comprising:
cyclically executing the following process until an exit condition is satisfied, where the exit condition is p>7;
setting (S5510) an initial value of p as 0, and the cyclically executed process comprising:
blocking (S5520) the time slot p of each carrier frequency;
transferring or releasing (S5530) services on the time slot p of each carrier frequency;
adding (S5540) the recovered shared frequency points to the time slot p of each carrier frequency in the frequency hopping system;
de-blocking (S5550) the time slot p of each carrier frequency; and
setting (S5560) p=p+1.

8. The method of claim 7, wherein transferring or releasing (S5530) services on the time slot p of each carrier frequency comprises:
setting (S5532) a delay timer, and releasing services, that are not transferred, in each carrier frequency in the frequency hopping system after the delay timer expires.

9. A controller (100), comprising: a memory (120), a processor (110), and computer programs that are stored on the memory (120) and runnable on the processor (110), wherein the computer programs, when executed by the processor (110), cause the processor (110) to execute:
the method of any one of claims 1 to 6; or
the method of claim 7.

10. A computer-readable storage medium storing computer-executable instructions, wherein the computer-executable instructions are configured to:
execute the method of any one of claims 1 to 6; or
execute the method of claim 7.

## Patentansprüche

1. Verfahren zum gemeinsamen Nutzen von Frequenzsprung-Frequenzpunkten, wobei das Verfahren aufweist:
ein Einordnen (S1000) von gemeinsam genutzten Frequenzpunkten in einem Frequenzsprungsystem von einer niedrigsten Priorität bis zu einer höchsten Priorität entsprechend einem kleinsten Abstand bis zu einem größten Abstand zu einem zentralen Frequenzpunkt in einem Long Term Evolution, LTE, -Netz;
ein Zuweisen (S2000) der gemeinsam genutzten Frequenzpunkte zu Trägerfrequenzen in dem Frequenzsprungsystem; und
in Erwiderung auf ein Feststellen, dass es freie Trägerfrequenzen in dem Frequenzsprungsystem gibt, und von Frequenzpunkten, die eine niedrigere Priorität haben als die der gemeinsam genutzten Frequenzpunkte in den freien Trägerfrequenzen, die gemeinsam genutzt wurden, ein gemeinsames Nutzen (S3000) der gemeinsam genutzten Frequenzpunkte in den freien Trägerfrequenzen zur Nutzung durch das LTE-Netz;
wobei das gemeinsame Nutzen (S3000) der gemeinsam genutzten Frequenzpunkte in den freien Trägerfrequenzen zur Nutzung durch das LTE-Netz aufweist:
ein Modifizieren (S3210) eines Frequenzsprungattributs der Trägerfrequenzen in dem Frequenzsprungsystem, und ein Freigeben (S3220) der gemeinsam genutzten Frequenzpunkte in den derzeit freien Trägerfrequenzen für das LTE-Netz zur Nutzung;
**dadurch gekennzeichnet, dass**:
das Modifizieren (S3210) eines Frequenzsprungattributs der Trägerfrequenzen in dem Frequenzsprungsystem aufweist:
ein zyklisches Ausführen des folgenden Prozesses, bis eine Exit-Bedingung erfüllt ist, wobei die Exit-Bedingung p>7 ist;
ein Einstellen (S3211) eines Anfangswertes von p auf 0, wobei der zyklisch ausgeführte Prozess Folgendes aufweist:
ein Blockieren (S3212) eines Zeitschlitzes p mit nicht freien Trägerfrequenzen;
ein Übertragen oder ein Freigeben (S3213) von Diensten in dem Zeitschlitz p der nicht freien Trägerfrequenzen;
ein Einstellen (S3214) des Frequenzsprungattributs des Zeitschlitzes p der gegenwärtig freien Trägerfrequenzen als kein Frequenzsprung;
ein Einstellen (S3215) des Frequenzsprungattributs des Zeitschlitzes p der nicht freien Trägerfrequenzen als Verwendung von Frequenzsprung-Frequenzpunkten, die nicht die gemeinsam genutzten Frequenzpunkte sind, die von den derzeit freien Trägerfrequenzen freigegeben werden sollen, um einen Frequenzsprung zu realisieren;
ein Entblocken (S3216) des Zeitschlitzes p der nicht freien Trägerfrequenzen; und
ein Einstellen (S3217) von p=p+1.

2. Verfahren nach Anspruch 1, wobei das Zuweisen (S2000) der gemeinsam genutzten Frequenzpunkte zu Trägerfrequenzen in dem Frequenzsprungsystem aufweist:
ein entsprechendes Zuweisen der gemeinsam genutzten Frequenzpunkte an Trägerfrequenzen mit dem größten Mobile Allocation Indication Offset bis zum kleinsten Mobile Allocation Indication Offset, MAIO, in einer Reihenfolge von der niedrigsten zur höchsten Priorität.

3. Verfahren nach Anspruch 1, wobei das Verfahren vor dem gemeinsamen Nutzen (S3000) der gemeinsam genutzten Frequenzpunkte in den freien Trägerfrequenzen zur Nutzung durch das LTE-Netz ferner Folgendes aufweist:
ein gemeinsames Nutzen (S3000) der gemeinsam genutzten Frequenzpunkte in den freien Trägerfrequenzen in Erwiderung auf eine Dienstauslastung für die verbleibenden nicht freien Trägerfrequenzen, die geringer als ein vorbestimmter Lastschwellenwert ist.

4. Verfahren nach Anspruch 1, wobei das Übertragen oder das Freigeben (S3213) von Diensten in dem Zeitschlitz p der nicht freien Trägerfrequenzen aufweist:
ein Triggern (S32131) der Dienste in dem Zeitschlitz p der nicht freien Trägerfrequenzen zur Übertragung; und
ein Einstellen (S32132) eines Verzögerungszeitgebers und ein Freigeben von Diensten, die nicht übertragen wurden, auf den nicht freien Trägerfrequenzen nach einem Ablauf des Verzögerungszeitgebers.

5. Verfahren nach Anspruch 1, wobei das Modifizieren (S3210) eines Frequenzsprungattributs der Trägerfrequenzen in dem Frequenzsprungsystem ferner aufweist:
ein Übertragen (S3218) von Frequenzsprungattribut-Setupinformationen an ein Basisstationssystem; und
ein Empfangen (S3219) von Antwortinformationen, die ein effektives Frequenzsprungsetup anzeigen, das von dem Basisstationssystem übertragen wird.

6. Verfahren nach Anspruch 1, wobei das Modifizieren (S3210) eines Frequenzsprungattributs der Trägerfrequenzen in dem Frequenzsprungsystem ferner aufweist:
in Erwiderung auf ein Auftreten einer Anomalie oder einer Konfigurationsänderung in Bezug auf das Frequenzsprungattribut und das gemeinsame Nutzen während des Modifikationsprozesses, ein Beenden des Modifikationsprozesses und ein Wiederherstellen des Frequenzsprungattributs des Frequenzsprungsystems wie vor der Modifikation.

7. Verfahren zum Wiederherstellen von Frequenzsprung-Frequenzpunkten, wobei das Verfahren Folgendes aufweist:
in Erwiderung auf ein Frequenzsprungsystem, das gemeinsam genutzte Frequenzpunkte mit einem LTE-Netz durch das Verfahren zum gemeinsamen Nutzen nach einem der Ansprüche 1 bis 6 gemäß einer Bedingung der Dienstbelegung gemeinsam nutzt, ein Wiederherstellen der gemeinsam genutzten Frequenzpunkte und ein erneutes Einfügen der wiederhergestellten gemeinsam genutzten Frequenzpunkte in das Frequenzsprungsystem;
wobei das Wiederherstellen der gemeinsam genutzten Frequenzpunkte und das erneute Einfügen der wiedergewonnenen gemeinsam genutzten Frequenzpunkte in das Frequenzsprungsystem aufweist:
ein Informieren (S5000) des LTE-Netzes über die wiederherzustellenden gemeinsam genutzten Frequenzpunkte; und
ein Neuzuweisen (S5200) der wiederhergestellten gemeinsam genutzten Frequenzpunkte an Trägerfrequenzen in dem Frequenzsprungsystem zur Nutzung;
**dadurch gekennzeichnet, dass**:
das Neuzuweisen (S5200) der wiederhergestellten gemeinsam genutzten Frequenzpunkte an Trägerfrequenzen in dem Frequenzsprungsystem zur Nutzung aufweist:
ein Modifizieren des Frequenzsprungattributs der Trägerfrequenzen in dem Frequenzsprungsystem, aufweisend:
ein zyklisches Ausführen des folgenden Prozesses, bis eine Exit-Bedingung erfüllt ist, wobei die Exit-Bedingung p>7 ist;
ein Einstellen (S5510) eines Anfangswerts von p auf 0, und der zyklisch ausgeführte Prozess Folgendes aufweist:
ein Blockieren (S5520) des Zeitschlitzes p einer jeden Trägerfrequenz;
ein Übertragen oder ein Freigeben (S5530) von Diensten in dem Zeitschlitz p einer jeden Trägerfrequenz;
ein Einfügen (S5540) der wiederhergestellten gemeinsam genutzten Frequenzpunkte in dem Zeitschlitz p einer jeden Trägerfrequenz in dem Frequenzsprungsystem;
ein Entblocken (S5550) des Zeitschlitzes p einer jeden Trägerfrequenz; und
ein Einstellen (S5560) von p=p+1.

8. Verfahren nach Anspruch 7, wobei das Übertragen oder das Freigeben (S5530) von Diensten in dem Zeitschlitz p einer jeden Trägerfrequenz aufweist:
ein Einstellen (S5532) eines Verzögerungszeitgebers und ein Freigeben von Diensten, die nicht übertragen wurden, auf jeder Trägerfrequenz in dem Frequenzsprungsystem nach einem Ablauf des Verzögerungszeitgebers.

9. Eine Steuerungs-Vorrichtung (100), die Folgendes aufweist: einen Speicher (120), einen Prozessor (110) und Computerprogramme, die in dem Speicher (120) gespeichert sind und auf dem Prozessor (110) ausgeführt werden können, wobei die Computerprogramme, wenn sie von dem Prozessor (110) ausgeführt werden, den Prozessor (110) veranlassen, Folgendes auszuführen:
das Verfahren nach einem der Ansprüche 1 bis 6; oder
das Verfahren nach Anspruch 7.

10. Ein computerlesbares Speichermedium, das computerausführbare Befehle speichert, wobei die computerausführbaren Befehle konfiguriert sind, um:
das Verfahren nach einem der Ansprüche 1 bis 6 auszuführen; oder
das Verfahren nach Anspruch 7 auszuführen.

## Revendications

1. Un procédé de partage de points de fréquence à saut de fréquence, comprenant :
le fait (S 1000) de classer des points de fréquence partagés dans un système à saut de fréquence d'une priorité la plus basse à une priorité la plus élevée selon une distance la plus petite à une distance la plus grande jusqu'à un point de fréquence centrale dans un réseau à évolution à long terme, LTE ;
le fait (S2000) d'allouer les points de fréquence partagés aux fréquences porteuses dans le système à saut de fréquence ; et
en réponse à la détection qu'il existe des fréquences porteuses inactives dans le système à saut de fréquence, et que les points de fréquence ont une priorité inférieure à celle des points de fréquence partagés dans les fréquences porteuses inactives ayant été partagés, le fait (S3000) de partager les points de fréquence partagés dans les fréquences porteuses inactives pour une utilisation par le réseau LTE ;
le partage (S3000) des points de fréquence partagés dans les fréquences porteuses inactives à utiliser par le réseau LTE comprenant :
le fait (S3210) de modifier un attribut de saut de fréquence des fréquences porteuses dans le système à saut de fréquence, et le fait (S3220) de libérer les points de fréquence partagés dans les fréquences porteuses actuellement inactives vers le réseau LTE pour utilisation ;
**caractérisé en ce que**,
la modification (S3210) d'un attribut de saut de fréquence des fréquences porteuses dans le système à saut de fréquence comprend :
le fait d'exécuter cycliquement le processus suivant jusqu'à ce qu'une condition de sortie soit satisfaite, la condition de sortie étant p>7 ;
le fait (S3211) de régler une valeur initiale de p sur 0, le processus exécuté de manière cyclique comprenant :
le fait (S3212) de bloquer un créneau temporel p de fréquences porteuses non inactives ;
le fait de transférer ou de libérer (S3213) des services sur le créneau temporel p des fréquences porteuses non inactives ;
le fait (S3214) de régler l'attribut de saut de fréquence du créneau temporel p des fréquences porteuses actuellement inactives sur aucun saut de fréquence ;
le fait (S3215) de régler l'attribut de saut de fréquence du créneau temporel p des fréquences porteuses non inactives sur utilisation des points de fréquence de saut de fréquence autres que les points de fréquence partagés devant être libérés par les fréquences porteuses actuellement inactives pour réaliser le saut de fréquence ;
le fait (S3216) de débloquer le créneau temporel p des fréquences porteuses non inactives ; et
le fait (S3217) de régler p=p+1.

2. Le procédé selon la revendication 1, dans lequel l'attribution (S2000) des points de fréquence partagés aux fréquences porteuses dans le système à saut de fréquence comprend :
le fait d'allouer de manière correspondante, dans un ordre allant de la priorité la plus faible à la priorité la plus élevée, les points de fréquence partagés aux fréquences porteuses ayant un plus grand décalage d'indication d'allocation mobile vers un plus petit décalage d'indication d'allocation mobile, MAIO (*"Mobile Allocation Indication Offset"*)*.*

3. Le procédé selon la revendication 1, comprenant en outre, avant de partager (S3000) les points de fréquence partagés dans les fréquences porteuses inactives à utiliser par le réseau LTE ;
le fait (S3000) de partager les points de fréquence partagés dans les fréquences porteuses inactives en réponse à une charge de service pour les fréquences porteuses non inactives restantes qui est inférieure à un seuil de charge prédéterminé.

4. Le procédé selon la revendication 1, dans lequel le transfert ou la libération (S3213) de services sur le créneau temporel p des fréquences porteuses non inactives comprend :
le fait (S32131) de déclencher les services sur le créneau temporel p des fréquences porteuses non inactives à transférer ; et
le fait (S32132) de régler un temporisateur de retard et de libérer des services, qui ne sont pas transférés, dans les fréquences porteuses non inactives après l'expiration du temporisateur de retard.

5. Le procédé selon la revendication 1, dans lequel la modification (S3210) d'un attribut de saut de fréquence des fréquences porteuses dans le système à saut de fréquence comprend en outre :
le fait (S3218) de transmettre des informations de configuration d'attribut de saut de fréquence à un système de station de base ; et
le fait (S3219) de recevoir des informations de réponse indiquant une configuration de saut de fréquence effective transmise par le système de station de base.

6. Le procédé selon la revendication 1, dans lequel la modification (S3210) d'un attribut de saut de fréquence des fréquences porteuses dans le système à saut de fréquence comprend en outre :
en réponse à l'apparition d'une anomalie ou d'un changement de configuration lié à l'attribut de saut de fréquence et au partage pendant le processus de modification, le fait de terminer le processus de modification, et de récupérer l'attribut de saut de fréquence du système à saut de fréquence avant modification.

7. Un procédé de récupération de points de fréquence à saut de fréquence, comprenant :
en réponse au fait qu'un système à saut de fréquence partage des points de fréquence partagés avec un réseau LTE par le procédé de partage selon l'une quelconque des revendications 1 à 6, selon une condition d'occupation du service, le fait de récupérer les points de fréquence partagée et d'ajouter à nouveau les points de fréquence partagée récupérés dans le système à saut de fréquence ;
la récupération des points de fréquence partagée et l'ajout des points de fréquence partagée récupérés dans le système à saut de fréquence comprenant à nouveau :
le fait (S5000) d'informer le réseau LTE des points de fréquence partagés à récupérer ; et
le fait (S5200) de réattribuer les points de fréquence partagée récupérés aux fréquences porteuses dans le système à saut de fréquence pour une utilisation ;
**caractérisé en ce que**,
la réattribution (S5200) des points de fréquence partagée récupérés aux fréquences porteuses dans le système à saut de fréquence pour utilisation comprend :
le fait de modifier l'attribut de saut de fréquence des fréquences porteuses dans le système à saut de fréquence, comprenant :
le fait d'exécuter cycliquement le processus suivant jusqu'à ce qu'une condition de sortie soit satisfaite, la condition de sortie étant p>7 ;
le fait (S5510) de régler une valeur initiale de p sur 0, et le processus exécuté de manière cyclique comprend :
le fait (S5520) de bloquer le créneau temporel p de chaque fréquence porteuse ;
le fait (S5530) de transférer ou de libérer des services sur le créneau temporel p de chaque fréquence porteuse ;
le fait (S5540) d'ajouter les points de fréquence partagée récupérés au créneau temporel p de chaque fréquence porteuse dans le système à saut de fréquence ;
le fait (S5550) de débloquer le créneau temporel p de chaque fréquence porteuse ; et
le fait (SS560) de régler p=p+1.

8. Le procédé selon la revendication 7, dans lequel le transfert ou la libération (S5530) de services sur le créneau temporel p de chaque fréquence porteuse comprend : le fait (S5532) de régler un temporisateur de retard et libérer des services, qui ne sont pas transférés, dans chaque fréquence porteuse dans le système à saut de fréquence après l'expiration du temporisateur de retard.

9. Un contrôleur (100), comprenant : une mémoire (120), un processeur (110) et des programmes informatiques qui sont stockés sur la mémoire (120) et exécutables sur le processeur (110), les programmes informatiques, lorsqu'ils sont exécutés par le processeur (110), amenant le processeur (110) à mettre en oeuvre :
le procédé selon l'une quelconque des revendications 1 à 6 ; ou
le procédé selon la revendication 7.

10. Un support de stockage lisible par ordinateur stockant des instructions exécutables par ordinateur, dans lequel les instructions exécutables par ordinateur sont configurées pour :
mettre en oeuvre le procédé selon l'une quelconque des revendications 1 à 6 ; ou
mettre en oeuvre le procédé selon la revendication 7.
